# FASCICULE DE BREVET EUROPEEN

(11) **EP 2 447 156 B1**
(45) Date de publication et mention de la délivrance du brevet: **17.04.2013**
(21) Numéro de dépôt: 11008264.1
(22) Date de dépôt: 13.10.2011
(51) Int. Cl.: B64D 1/22, B66C 23/00

(54) **Avion à voilure tournante muni d'un moyen de treuillage et procédé associé**
Drehflügler ausgestattet mit Hubvorrichtung und zugehöriges Verfahren
Rotorcraft provided with hoisting means and associated method

(30) Priorité: 27.10.2010 FR 1004224
(43) Date de publication de la demande: 02.05.2012
(73) Titulaire: EUROCOPTER, 13725 Marignane Cédex (FR)
(72) Inventeur: Figoureux, David, 13300 Salon de Provence (FR); Ayache, David, 13610 Le Puy Sainte Reparade (FR); Gaillard, Christophe, 13640 La Roque D'Antheron (FR)
(74) Mandataire: GPI & Associés

(56) Documents cités:
- EP-A1- 0 110 786
- WO-A1-2005/025984
- DE-A1- 3 323 513
- US-A- 4 750 691
- US-A- 5 020 742

## Description

La présente invention concerne un aéronef muni d'un moyen d'hélitreuillage, et notamment un aéronef à voilure tournante, ainsi que le procédé associé.

Un moyen d'hélitreuillage comporte classiquement un treuil agencé à l'aplomb d'une cabine d'un aéronef à voilure tournante par exemple, un tel treuil ayant un tambour rotatif autour duquel s'enroule ou se déroule un câble pour notamment soulever ou transporter une charge externe.

Le treuil est agencé sur un flanc de l'aéronef, à l'aplomb d'une cabine par exemple.

Ce type d'installation est toutefois limitatif sur les aéronefs de faible tonnage. En effet, lorsque le treuil porte une charge élevée, de l'ordre de 150 kilogrammes par exemple, l'aéronef tend à basculer selon un mouvement de roulis du côté de ladite charge. De plus, le centrage de l'aéronef se trouve particulièrement impacté.

Dès lors, un hélicoptère léger muni d'un treuil sur un flanc latéral est capable de porter uniquement une charge relativement faible, inférieure à 150 kilogrammes par exemple alors qu'un hélicoptère de fort tonnage peut porter une charge supérieure à 250 kilogrammes par exemple.

L'arrière plan technologique inclut les documents DE 33 23 513, US 4 750 691, US 5 020 742, DE 197 09 380, US 3 088 608, GB 2 303 837, WO 2005/025 984, US 4 013 270.

Le document DE 33 23 513 a pour objet un aéronef muni d'un treuil porté par une extrémité d'un support, le support comprenant une poutre extensible fixée à l'intérieur d'une cabine. Le treuil se situe à l'aplomb de la charge à porter et donc du même côté que cette charge par rapport à un plan antéropostérieur de symétrie de l'aéronef.

Le document US 4 750 691 décrit un moyen d'hélitreuillage comportant une poutre rétractable articulée à un flanc d'un aéronef. De plus, ce moyen d'hélitreuillage est muni d'un treuil agencé dans une zone carénée dudit flanc, à l'aplomb de la fixation de la poutre au flanc.

Un câble dudit treuil s'étend alors le long de ladite poutre puis sort de l'aéronef par une extrémité de sortie pour être relié à un moyen d'accrochage.

Lorsque la poutre est déployée hors de la cabine, le câble permet de soutenir des charges externes. Le treuil se situe alors sensiblement à l'aplomb de la charge à porter, et du même côté que cette charge par rapport à un plan antéropostérieur de symétrie de l'aéronef.

Le document US 5 020 742 décrit un moyen d'hélitreuillage comportant un treuil disposé sur un flanc d'un hélicoptère et une poutre de guidage du câble dudit treuil permettant de déporter un crochet du câble hors du souffle du rotor de sustentation de l'aéronef.

Le treuil et la charge à porter se situent du même côté que cette charge par rapport à un plan antéropostérieur de symétrie de l'aéronef.

Le document DE 197 09 380 ne fait pas partie du domaine technique de l'invention, en se rapportant à un bâtiment.

Le document US 3 088 608 prévoit une poutre pivotante, cette poutre étant commandée par un moteur situé à l'aplomb de la charge portée par ladite poutre, et donc du même côté que cette charge par rapport à un plan antéropostérieur de symétrie de l'aéronef.

Le document GB 2 303 837 suggère d'utiliser un treuil coopérant avec un bras déflecteur pour écarter le câble du treuil de l'aéronef. Le treuil et la charge portée par ce treuil se trouvent alors du même côté de l'aéronef par rapport à un plan antéropostérieur de symétrie de l'aéronef

Le document WO 2005/025984 décrit un dispositif de sauvetage et non pas un dispositif d'hélitreuillage, le dispositif de sauvetage ayant pour fonction de happer en vol un individu.

Ce dispositif de sauvetage est fixé au train d'atterrissage d'un aéronef.

Le document US 4 013 270 présente une poutre supportant un treuil et une poulie.

La présente invention concerne alors un aéronef de type aéronef à voilure tournante de faible tonnage apte à supporter des charges élevées.

Selon l'invention, un aéronef est muni d'une cellule s'étendant d'une extrémité avant vers une extrémité arrière le long d'un plan antéropostérieur de symétrie longitudinale en élévation séparant transversalement un premier côté d'un deuxième côté dudit aéronef, cet aéronef étant pourvu d'un moyen d'hélitreuillage comportant un treuil pourvu d'un tambour d'enroulement d'un câble de levage, le moyen d'hélitreuillage comportant une poutre de guidage du câble, cette poutre s'étendant d'une première extrémité d'entrée du câble vers une deuxième extrémité de sortie du câble.

La première extrémité est qualifiée d'entrée dans la mesure où le câble rentre dans la poutre en provenant du treuil par cette première extrémité. A l'inverse, la deuxième extrémité est qualifiée de sortie dans la mesure où le câble sort de la poutre par cette deuxième extrémité pour rejoindre un moyen d'accrochage de la charge externe à porter.

On note que l'aéronef peut être de tout type même si le terme hélitreuillage est normalement relatif aux hélicoptères, et notamment du type giravion.

De plus, le moyen d'hélitreuillage comporte un contrepoids, ce contrepoids incluant le treuil qui coopère avec la première extrémité de la poutre, la deuxième extrémité se trouvant du deuxième côté alors que le treuil et la première extrémité se trouvent du premier côté de l'aéronef.

Dès lors, le treuil et la charge portée par le moyen d'hélitreuillage se trouve de part et d'autre du plan antéropostérieur et non pas d'un même côté.

Le treuil est alors non seulement un moyen d'enroulement et déroulement d'un câble mais aussi une partie constitutive d'un contrepoids. On obtient alors un contrepoids sans augmenter de façon abusive la masse globale du moyen d'hélitreuillage.

La mise en place de ce contrepoids permet à l'aéronef de porter des charges élevées sans influer sur son attitude en roulis.

On note que cet agencement améliore de plus l'aérodynamisme du moyen d'hélitreuillage, le treuil ne générant en effet pas une traînée parasite à l'extérieur de l'aéronef.

Cet aéronef peut comporter une ou plusieurs des caractéristiques qui suivent.

Par exemple, la deuxième extrémité peut comporter une poulie de renvoi pour éviter une dégradation du câble par frottement.

Selon un autre aspect, la deuxième extrémité peut être située à l'aplomb d'une porte latérale de la cellule débouchant sur un espace interne de l'aéronef occupé par des individus, une cabine ou un cockpit de l'aéronef.

Dès lors, un individu peut participer à l'opération d'hélitreuillage à partir dudit espace interne

On comprend que le treuil est alors transversalement opposé à la porte latérale

Par ailleurs, lorsque l'aéronef comporte une voilure tournante mise en rotation par une boîte de transmission de puissance principale, la boîte de transmission de puissance étant agencée dans un compartiment mécanique disposé dans un plan supérieur surplombant un espace interne de l'aéronef occupé par des individus, le treuil est favorablement agencé dans ce compartiment mécanique.

Un tel compartiment mécanique connu parfois sous la dénomination « compartiment BTP » en langue française est une zone particulièrement encombrée. En effet, outre la boîte de transmission de puissance de la voilure tournante, le compartiment mécanique accueille de multiples tuyauteries, de nombreux câblage des moyens de fixation de la boîte de transmission de puissance voire des commandes de vol agissant sur la voilure tournante. Toutefois, on constate étonnamment qu'il demeure possible de libérer un emplacement dans le compartiment mécanique pour le contrepoids du moyen d'hélitreuillage et notamment son treuil.

La poutre traverse alors un capot de la cellule situé du deuxième côté afin que la deuxième extrémité se trouve à l'extérieur de l'aéronef.

Ce compartiment mécanique peut être agencé longitudinalement entre un espace interne de l'aéronef occupé par des individus et l'extrémité arrière.

De plus, le contrepoids peut comporter un carénage solidaire de la première extrémité, ledit treuil étant agencé dans le carénage.

Ce carénage est aussi un moyen de protection contre le feu du treuil.

En fonction des contraintes d'environnement que peut supporter le treuil, on peut supprimer le carénage spécifique au treuil puisque ledit treuil est dans une zone fermée, non manipulable par du personnel en période d'utilité.

Selon un autre aspect, le moyen d'hélitreuillage comporte un moyen de soutènement de la poutre, le moyen de soutènement étant agencé du deuxième côté de l'aéronef.

Outre un aéronef, l'invention vise un procédé pour optimiser la charge externe pouvant être portée par un moyen d'hélitreuillage d'un aéronef muni d'une cellule s'étendant d'une extrémité avant vers une extrémité arrière le long d'un plan antéropostérieur de symétrie longitudinal en élévation séparant transversalement un premier côté d'un deuxième côté dudit aéronef, le moyen d'hélitreuillage comportant un treuil pourvu d'un tambour d'enroulement d'un câble de levage, le moyen d'hélitreuillage comportant une poutre de guidage du câble, la poutre s'étendant d'une première extrémité d'entrée dudit câble vers une deuxième extrémité de sortie dudit câble.

Selon ce procédé, on agence un contrepoids du premier côté de l'aéronef, ce contrepoids incluant le treuil.

L'invention et ses avantages apparaîtront avec plus de détails dans le cadre de la description qui suit avec des exemples de réalisation donnés à titre illustratif en référence aux figures annexées qui représentent :
- la figure 1, une vue de dessus d'un aéronef selon l'invention,
- la figure 2, une vue de face d'un aéronef selon l'invention, et
- la figure 3, une vue isométrique tronquée d'un aéronef selon l'invention.

Les éléments présents dans plusieurs figures distinctes sont affectés d'une seule et même référence.

On note que trois directions X, Y et Z orthogonales les unes par rapport aux autres sont représentées sur les figures.

La direction X est dite longitudinale dans la mesure où l'aéronef représenté s'étend longitudinalement selon cette direction.

Une autre direction Y est dite transversale.

Enfin, une troisième direction Z est dite d'élévation et correspond aux dimensions en hauteur des structures décrites. Le terme « épaisseur » est alors relatif à une dimension en élévation du dispositif selon cette direction d'élévation.

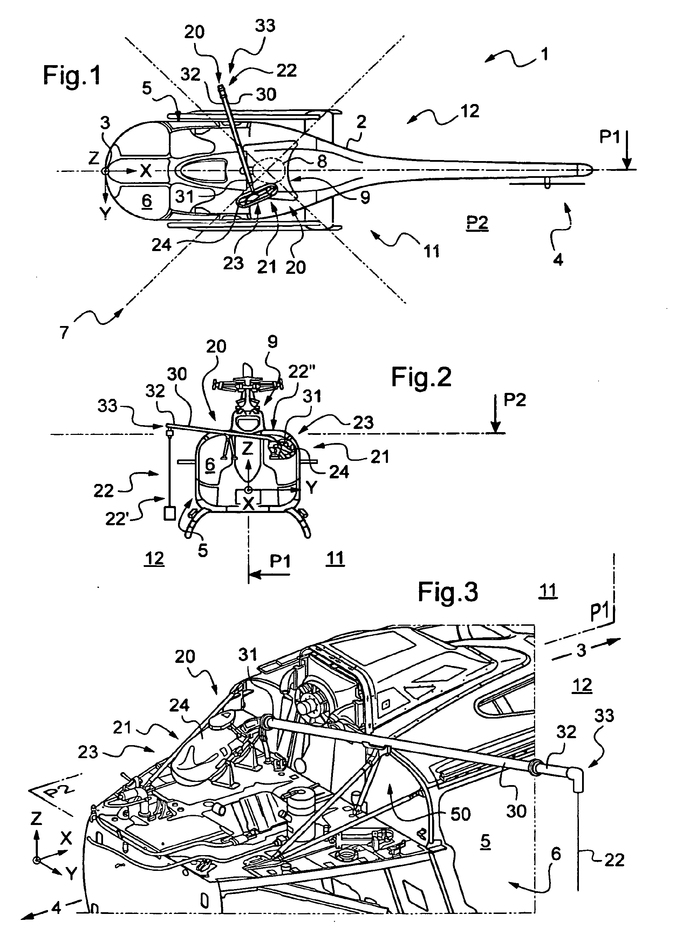

Les figures 1 à 3 présentent un aéronef 1 selon l'invention.

Cet aéronef 1 comporte une cellule 2 s'étendant longitudinalement selon un plan antéropostérieur P1 de symétrie d'une extrémité avant 3 vers une extrémité arrière 4.

Dès lors, le plan antéropostérieur P1 délimite l'aéronef transversalement, ce plan antéropostérieur P1 séparant un premier côté 11 et un deuxième côté 12 de cet aéronef 1.

Selon des termes empruntés au domaine naval, le premier côté est le côté bâbord de l'aéronef 1 sur l'exemple représenté, le deuxième côté étant le côté tribord. La configuration inverse est possible suivant le besoin.

L'aéronef 1 présenté est un giravion muni d'une voilure tournante 7, entraînée en rotation par une boîte de transmission de puissance 8 principale agencée dans un compartiment mécanique 8. De plus, l'extrémité arrière 4 est pourvue d'un rotor anticouple.

Le compartiment mécanique 8 est alors contenu dans un plan supérieur P2 surplombant en élévation un espace interne 6 de l'aéronef occupé par des individus, à savoir la cabine de l'aéronef 1. De plus, le compartiment mécanique 8 se trouve entre cet espace interne 6 et l'extrémité arrière 4 selon la direction longitudinale X.

Par ailleurs, en référence à la figure 2, l'aéronef 1 comporte un moyen d'hélitreuillage 20 comportant un treuil 21 coopérant avec un câble 22 de levage, une première zone distale 22' du câble 22 s'enroulant ou se déroulant autour d'un tambour du treuil 21 non visible sur les figures. Le treuil 21 est alors pourvu d'un moteur apte à mettre en rotation le tambour pour enrouler ou dérouler le câble 20 suivant l'ordre donné par un opérateur, cet opérateur étant présent dans ledit espace interne 6.

En outre, une deuxième zone distale 22" du câble 22 comporte un moyen d'accrochage d'une charge externe, un harnais supportant un individu par exemple.

Le câble 22 est guidé hors de l'aéronef 1 à l'aide d'une poutre 30 de guidage. Une telle poutre est parfois dénommée « potence » en langue française.

La poutre 30 s'étend alors d'une première extrémité 31 d'entrée vers une deuxième extrémité 32 de sortie. Le câble provenant dudit treuil 21 pénètre alors dans la poutre par la première extrémité 31 d'entrée, puis sort de cette poutre 30 par la deuxième extrémité 32 de sortie pour atteindre la charge externe.

La poutre 30 peut être un rail ou encore un tube longiligne creux par exemple.

La deuxième extrémité 32 est éventuellement munie d'une poulie de renvoi 33 pour favoriser le changement de direction du câble 22, d'une direction transversale vers une direction en élévation.

Afin de permettre le maniement du câble par un opérateur, la deuxième extrémité 32 est située à l'aplomb d'une porte latérale 5 de la cellule 2, la porte latérale obturant l'espace interne 6.

Pour permettre à un giravion de faible tonnage de porter une charge relativement élevée, un giravion de l'ordre de 2,5 à 3 tonnes devant porter une charge de 300 kilogrammes par exemple, le moyen d'hélitreuillage possède un contrepoids 23 agencé transversalement à l'opposé de la deuxième extrémité 32 de la poutre 30, contrairement aux 150 kilogrammes mentionnés plus haut.

Ce contrepoids 23 comprend le treuil 21.

Dès lors, le treuil 21 coopère avec la première extrémité 31 de la poutre, en lui étant éventuellement fixé directement ou indirectement via un autre organe du contrepoids 23.

Ainsi, le treuil 21 est transversalement opposé à la porte latérale 5. En effet, le treuil 21 et la première extrémité 31 de la poutre se trouve du premier côté 11 de l'aéronef 1, alors qu'à l'inverse la porte latérale 5 et la deuxième extrémité 32 de la poutre 30 sont situées du deuxième côté de l'aéronef 1.

Le treuil 21 représente donc bien un contrepoids à la charge externe supportée limitant voire supprimant un effet de cette charge externe sur le mouvement en roulis de l'aéronef.

Le contrepoids 23 peut aussi comprendre un carénage 24 solidaire de la première extrémité 31, le treuil 21 étant fixé à l'intérieur de ce carénage 24. Par suite, le treuil 21 est alors fixé indirectement à la première extrémité 31 de la poutre 30.

En référence à la figure 3, selon une variante préférée, le contrepoids est agencé dans le compartiment mécanique 9. Dès lors, le treuil 21, le carénage 24 et la première extrémité 31 se trouvent dans ce compartiment mécanique 9 du premier côté 11 de l'aéronef.

La poutre 30 traverse alors un capot de la cellule 2 pour atteindre l'extérieur.

De plus, le moyen d'hélitreuillage représenté comprend un moyen de soutènement 50 de la poutre 30, ce moyen de soutènement étant disposé dans le compartiment mécanique 9, du deuxième côté 12 de l'aéronef 1.

On constatera également sur un aéronef disposant d'un treuil monté sur une potence, que l'élévation maximale du crochet porté par la corde du moyen d'hélitreuillage par rapport au plancher de l'aéronef est limitée par une garde minimale entre le treuil équipé de son carénage et le disque rotor.

Suivant la présente invention, seule une poulie de renvoie est présente à l'extrémité de la potence, à savoir la deuxième extrémité de la poutre 30. Le crochet peut donc être monté un peu plus haut par rapport au plancher, tout en conservant la même garde au disque rotor. Cette hauteur supplémentaire permet de faciliter le travail du treuilliste pour faire venir la charge dans la cellule 2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'une cellule (2) s'étendant d'une extrémité avant (3) vers une extrémité arrière (4) le long d'un plan antéropostérieur (P1) de symétrie longitudinal en élévation séparant transversalement un premier côté (11) d'un deuxième côté (12) dudit aéronef (1), ledit aéronef (1) étant pourvu d'un moyen d'hélitreuillage (20) comportant un treuil (21) pourvu d'un tambour d'enroulement d'un câble (22) de levage, ledit moyen d'hélitreuillage (20) comportant une poutre (30) de guidage dudit câble, ladite poutre (30) s'étendant d'une première extrémité (31) d'entrée dudit câble (22) vers une deuxième extrémité (32) de sortie dudit câble (22),
ledit moyen d'hélitreuillage (20) comportant un contrepoids (23), **caractérisé en ce que** ledit contrepoids inclut ledit treuil (21) qui coopère avec ladite première extrémité de ladite poutre (31), ladite deuxième extrémité (32) de ladite poutre se trouvant dudit deuxième côté (12) alors que ledit treuil (21) et ladite première extrémité (31) se trouvent dudit premier côté (11).

2. Aéronef selon la revendication 1,
**caractérisé en ce que** ladite deuxième extrémité (32) comporte une poulie (33) de renvoi.

3. Aéronef selon l'une quelconque des revendications 1 à 2,
**caractérisé en ce que** ladite deuxième extrémité (32) est située à l'aplomb d'une porte latérale (5) de la cellule (2) débouchant sur un espace interne (6) de l'aéronef (1) occupé par des individus à savoir une cabine ou un cockpit de l'aéronef.

4. Aéronef selon l'une quelconque des revendications 1 à 3,
**caractérisé en ce que**, ledit aéronef (1) comportant une voilure tournante (7) mise en rotation par une boîte de transmission de puissance (8), ladite boîte de transmission de puissance (8) étant agencée dans un compartiment mécanique (9) disposé dans un plan supérieur (P2) surplombant un espace interne (6) de l'aéronef (1) occupé par des individus à savoir une cabine ou un cockpit de l'aéronef, ledit treuil (21) est agencé dans ledit compartiment mécanique (9).

5. Aéronef selon l'une quelconque des revendications 1 à 4,
**caractérisé en ce que** ledit compartiment mécanique (9) est agencé longitudinalement entre ladite extrémité arrière (4) et un espace interne (6) de l'aéronef (1) occupé par des individus, à savoir une cabine ou un cockpit de l'aéronef.

6. Aéronef selon l'une quelconque des revendications 1 à 5,
**caractérisé en ce que** ledit contrepoids comporte un carénage (24) solidaire de ladite première extrémité (31), ledit treuil (21) étant agencé dans ledit carénage (24).

7. Aéronef selon l'une quelconque des revendications 1 à 6,
**caractérisé en ce que** le moyen d'hélitreuillage (20) comporte un moyen de soutènement (50) de ladite poutre, ledit moyen de soutènement (50) étant agencé dudit deuxième côté (11).

8. Procédé pour optimiser la charge externe pouvant être portée par un moyen d'hélitreuillage (20) d'un aéronef (1) muni d'une cellule (2) s'étendant d'une extrémité avant (3) vers une extrémité arrière (4) le long d'un plan antéropostérieur (P1) de symétrie en élévation séparant transversalement un premier côté (11) d'un deuxième côté (12) dudit aéronef (1), ledit moyen d'hélitreuillage (20) comportant un treuil (21) pourvu d'un tambour d'enroulement d'un câble (22) de levage, ledit moyen d'hélitreuillage (20) comportant une poutre (30) de guidage dudit câble (22), ladite poutre (30) s'étendant d'une première extrémité (31) d'entrée dudit câble vers une deuxième extrémité (32) de sortie dudit câble (22),
**caractérisé en ce que** l'on agence un contrepoids (23) dudit premier côté (11) de l'aéronef (1), ledit contrepoids (23) incluant ledit treuil (21).

## Claims

1. Aircraft (1) provided with an airframe (2) extending from a front end (3) to a rear end (4) along a longitudinal anteroposterior plane (P1) of symmetry in elevation transversely separating a first side (11) of said aircraft (1) from a second side (12) thereof, said aircraft (1) being provided with helihoisting means (20) comprising a winch (21) provided with a drum for winding a hoisting cable (22), said helihoisting means (20) comprising a beam (30) for guiding said cable, said beam (30) extending from a first, inlet end (31) for said cable (22) to a second, outlet end (32) for said cable (22),
said helihoisting means (20) comprising a counterweight (23), **characterised in that** said counterweight includes said winch (21) which cooperates with said first end of said beam (31), said second end (32) of said beam being located on said second side (12) while said winch (21) and said first end (31) are located on said first side (11).

2. Aircraft according to Claim 1,
**characterised in that** said second end (32) comprises a deflection pulley (33).

3. Aircraft according to any one of Claims 1 to 2,
**characterised in that** said second end (32) is situated vertically in line with a side door (5) of the airframe (2) leading to an inside space (6) of the aircraft (1) that is occupied by people, i.e. a cabin or a cockpit of the aircraft.

4. Aircraft according to any one of Claims 1 to 3,
**characterised in that** said aircraft (1) comprises a rotary wing (7) set into rotation via a gearbox (8), said gearbox (8) being arranged in a mechanical compartment (9) arranged in an upper plane (P2) above an inside space (6) of the aircraft (1) that is occupied by people, i.e. a cabin or a cockpit of the aircraft, and said winch (21) is arranged in said mechanical compartment (9).

5. Aircraft according to any one of Claims 1 to 4,
**characterised in that** said mechanical compartment (9) is arranged longitudinally between said rear end (4) and an inside space (6) of the aircraft (1) occupied by people, i.e. a cabin or a cockpit of the aircraft.

6. Aircraft according to any one of Claims 1 to 5,
**characterised in that** said counterweight comprises a fairing (24) secured to said first end (31), said winch (21) being arranged in said fairing (24).

7. Aircraft according to any one of Claims 1 to 6,
**characterised in that** the helihoisting means (20) comprise support means (50) for supporting said beam, said support means (50) being arranged on said second side (11).

8. Method for optimising the external load that can be carried by helihoisting means (20) of an aircraft (1) provided with an airframe (2) extending from a front end (3) to a rear end (4) along an anteroposterior plane (P1) of symmetry in elevation transversely separating a first side (11) of said aircraft (1) from a second side (12) thereof, said helihoisting means (20) comprising a winch (21) provided with a drum for winding a hoisting cable (22), said helihoisting means (20) comprising a beam (30) for guiding said cable (22), said beam (30) extending from a first, inlet end (31) for said cable to a second, outlet end (32) for said cable (22),
**characterised in that** a counterweight (23) is arranged on said first side (11) of the aircraft (1), said counterweight (23) including said winch (21).

## Patentansprüche

1. Luftfahrzeug (1) mit einem Rumpf (2), der sich von einem vorderen Ende (3) bis zu einem hinteren Ende (4) entlang einer anteroposterioren senkrechten Längssymmetrieebene (P1) erstreckt, die in Querrichtung eine erste Seite (11) von einer zweiten Seite (12) des Luftfahrzeugs (1) trennt, wobei das Luftfahrzeug (1) mit einer Helikopter-Hubvorrichtung (20) versehen ist, die eine Winde (21) aufweist mit einer Trommel zum Aufrollen eines Hebekabels (22), wobei die Helikopter-Hubvorrichtung (20) einen Träger (30) zum Führen des Kabels aufweist, wobei der Träger (30) sich von einem ersten Eingangsende (31) des Kabels (22) bis zu einem zweiten Ausgangsende (32) des Kabels (22) erstreckt, wobei die Helikopter-Hubvorrichtung (20) ein Gegengewicht (23) aufweist,
**dadurch gekennzeichnet, dass** das Gegengewicht die Winde (21) umfasst, die mit dem ersten Ende des Trägers (31) zusammenwirkt, wobei das zweite Ende (32) des Trägers sich auf der zweiten Seite (12) befindet, während die Winde (21) und das erste Ende (31) sich auf der ersten Seite (11) befinden.

2. Luftfahrzeug nach Anspruch 1,
**dadurch gekennzeichnet, dass** das zweite Ende (32) eine Umlenkrolle (33) aufweist.

3. Luftfahrzeug nach einem der Ansprüche 1 oder 2,
**dadurch gekennzeichnet, dass** das zweite Ende (32) auf der Höhe einer Seitentür (5) des Rumpfes (2) gelegen ist, die sich zu einem mit Personen besetzten Innenraum (6) des Luftfahrzeugs (1) öffnet, d.h. einer Kabine oder einem Cockpit des Luftfahrzeugs.

4. Luftfahrzeug nach einem der Ansprüche 1 bis 3,
**dadurch gekennzeichnet, dass** das Luftfahrzeug (1) einen Drehflügel (7) aufweist, der über ein Leistungsgetriebe (8) in eine Drehbewegung versetzt wird, wobei das Leistungsgetriebe (8) in einem Maschinenraum (9) angeordnet ist, der in einer oberen Ebene (P2) über einem mit Personen besetzten Innenraum (6) des Luftfahrzeugs (1) angeordnet ist, d.h. einer Kabine oder einem Cockpit des Luftfahrzeugs, wobei die Winde (21) in dem Maschinenraum (9) angeordnet ist.

5. Luftfahrzeug nach einem der Ansprüche 1 bis 4,
**dadurch gekennzeichnet, dass** der Maschinenraum (9) in Längsrichtung zwischen dem hinteren Ende (4) und einem mit Personen besetzten Innenraum (6) des Luftfahrzeugs (1), d.h. einer Kabine oder einem Cockpit des Luftfahrzeugs, angeordnet ist.

6. Luftfahrzeug nach einem der Ansprüche 1 bis 5,
**dadurch gekennzeichnet, dass** das Gegengewicht eine Verkleidung (24) aufweist, die mit dem ersten Ende (31) fest verbunden ist, wobei die Winde (21) in der Verkleidung (24) angeordnet ist.

7. Luftfahrzeug nach einem der Ansprüche 1 bis 6,
**dadurch gekennzeichnet, dass** die Helikopter-Hubvorrichtung (20) ein Stützmittel (50) des Trägers aufweist, wobei das Stützmittel (50) auf der zweiten Seite (11) angeordnet ist.

8. Verfahren zum Optimieren der äußeren Last, die von einer Helikopter-Hubvorrichtung (20) eines Luftfahrzeugs (1) getragen werden kann, wobei das Luftfahrzeug mit einem Rumpf (2) versehen ist, der sich von einem vorderen Ende (3) bis zu einem hinteren Ende (4) entlang einer anteroposterioren senkrechten Symmetrieebene (P1) erstreckt, die in Querrichtung eine erste Seite (11) von einer zweiten Seite (12) des Luftfahrzeugs (1) trennt, wobei die Helikopter-Hubvorrichtung (20) eine Winde (21) aufweist mit einer Trommel zum Aufrollen eines Hebekabels (22), wobei die Helikopter-Hubvorrichtung (20) einen Träger (30) zum Führen des Kabels (22) aufweist, wobei der Träger (30) sich von einem ersten Eingangsende (31) des Kabels bis zu einem zweiten Ausgangsende (32) des Kabels (22) erstreckt,
**dadurch gekennzeichnet, dass** ein Gegengewicht (23) auf der ersten Seite (11) des Luftfahrzeugs (1) angeordnet wird, wobei das Gegengewicht (23) die Winde (21) umfasst.
